Europäisches Patentamt

European Patent Office

Office européen des brevets

(11) Publication number: **0 068 266**
**A1**

## EUROPEAN PATENT APPLICATION

(21) Application number: **82105192.7**

(22) Date of filing: **14.06.82**

(51) Int. Cl.³: **D 06 F 33/02**, A 47 L 15/46, G 05 B 23/02

(30) Priority: **18.06.81 IT 6783981**

(43) Date of publication of application: **05.01.83**
**Bulletin 83/1**

(84) Designated Contracting States: **DE FR GB NL SE**

(71) Applicant: **INDESIT INDUSTRIA ELETTRODOMESTICI ITALIANA S.p.A., Str. Piossasco Km 17, I-10040 Rivalta Turin (IT)**

(72) Inventor: **Di Chiara, Enrico, Viale Kennedy, 41, I-10015 Ivrea (Torino) (IT)**
Inventor: **Marincola, Damiano, Via Costantino Nigra, 42, I-10100 Torino (IT)**

(74) Representative: **Prato, Roberto et al, c/o Ingg. Carlo e Mario Torta Via Viotti 9, I-10121 Torino (IT)**

(54) Household appliance in particular a washing machine with automatic operation and fault indication control.

(57) The present invention describes a household appliance, in particular, a washing machine, comprising a number of actuators (49, 50, 51, 52, 47, 60, 45) controlled according to operating cycles. The main feature of the appliance is that it comprises means (65) for automatic, repeat control of the operation of the said actuators by controlling electric signals (76) obtained by means (182', 182, 136, 153) for detecting the operation of an electric signal (111', 113', 112', 114') controlling the said actuators.

(Continuation next page)

ACTORUM AG

0068266

- 1 -

# HOUSEHOLD APPLIANCE IN PARTICULAR A WASHING MACHINE WITH AUTO MATIC OPERATION AND FAULT INDICATION CONTROL.

The present invention relates to a household appliance, in particular, a washing machine, of the type on which the actuators are controlled according to operating cycles over a microprocessor.

Household appliances of this sort are not new. After the operator has selected the type of wash load by means of the pushbuttons, the microprocessor determines a given operating cycle which it controls in sequence. In the case of a washing machine, this involves opening the electrovalves for filling the machine with water or special additives, heating the water, turning the basket, draining off the water, spinning, etc.

On certain appliances, provision is also made for operational control which usually consists in controlling an electric output signal on the microprocessor. Indirect control of this sort obviously has drawbacks in that it does not detect wheter the control signal actually reaches the actuator.

The aim of the present invention is to provide a household appliance of the type described but with direct, automatic control of the operation of each individual actuator throughout the entire operating cycle.

Another aim of the present invention is to detect a signal
indicating a fault on one of the said actuators and memorise it for informing both the microprocessor and the operator for diagnostic purposes.

Further aims and advantages of the appliance covered by the
present invention will be given in the following description.
The present invention therefore relates to a household appliance comprising a number of actuators controlled according
to operating cycles, characterised by the fact that it comprises means for automatic, repeat control of the operation
of the said actuators by controlling electric signals obtained by means for detecting the operation of an electric
signal controlling the said actuators.

The invention will now be described, by way of a non-limit
ing example, with reference to the attached drawing, in
which :

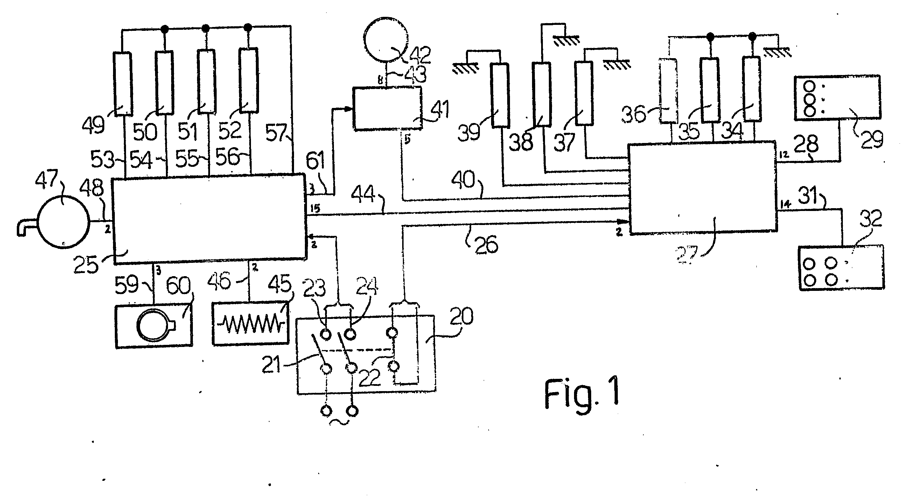

- Fig. 1 shows a block diagram of the appliance according to
the present invention;

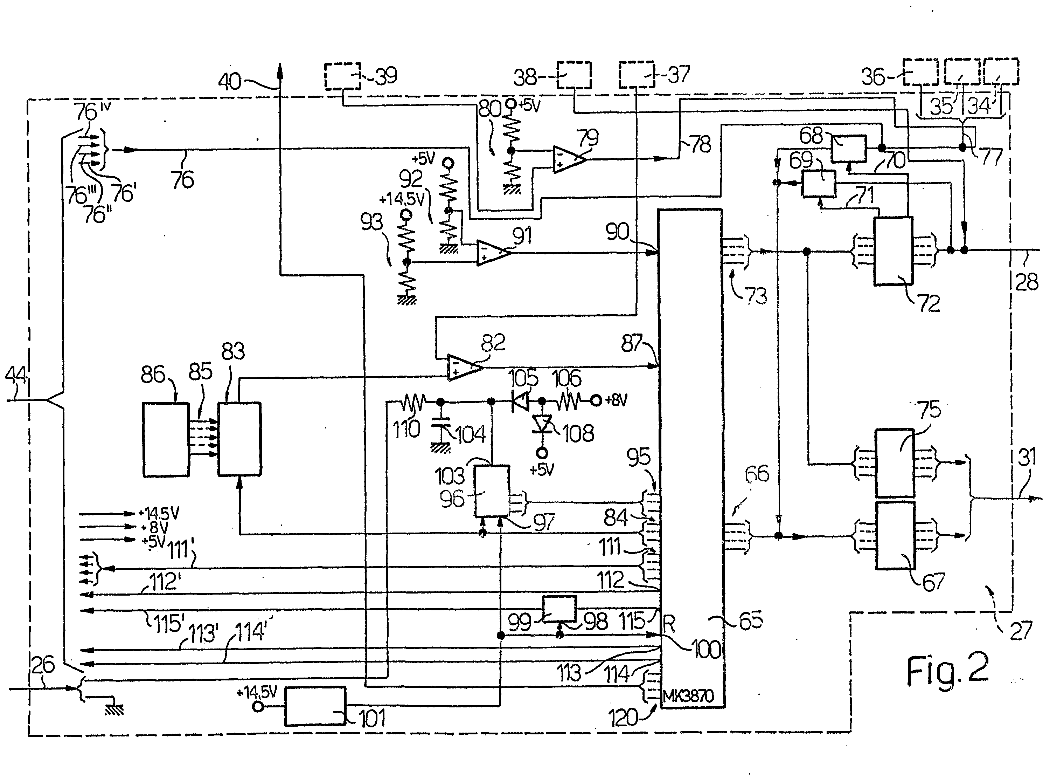

- Figs 1 and 2 show detailed electric diagrams of two blocks
on the Fig. 1 appliance;

- Fig. 4 shows a control board on the Fig. 1 appliance;

- Figs 5, 6, 7 and 8 show operational flow charts of the pro-
cessor on the Fig. 1 appliance.

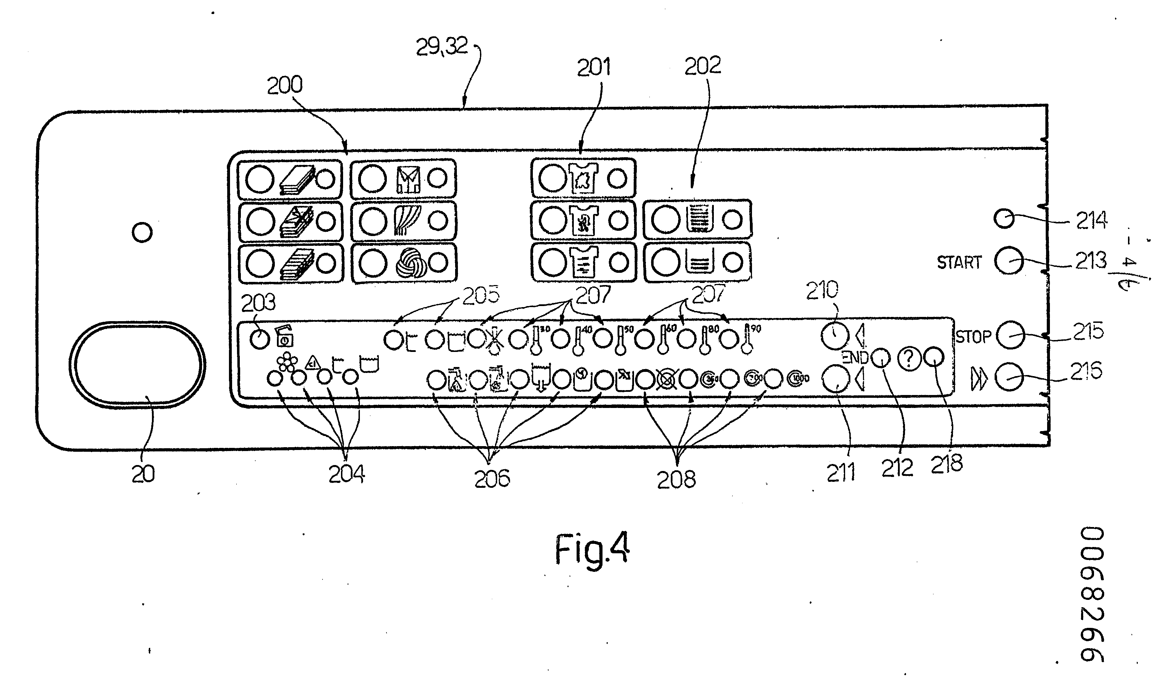

Number 20 in Fig. 1 indicates the appliance on/off switch
consisting of a double switch (21) connected mechanically to a single switch (22) whose operation is complementary to
switch 21, that is, when one opens the other closes and vice
versa. Double switch 21 is set up on a.c. mains supply phases
23 and 24 which are connected to power control unit 25. In
this Figure, multiwire connections are shown by a single line
with the number of connections indicated next to it.
Single switch 22, on the other hand, is series connected to
block 27 comprising the control logic on the appliance, in
this case, a washing machine. Block 27 is connected, over
12-wire line 28, to button panel block 29, and, over 14-wire
line 31, to LED indicator block 32. Both blocks 29 and 32 are
shown in more detail in Fig. 4. Block 27 is also connected
to three pressure switches (34, 35, 36) arranged at different heights inside the wash tub and which consist of switches
that close when the water level reaches them. The other ends
of the pressure switches are grounded.
Block 27 is also connected to :
- negative temperature coefficient resistor 37 which is also
grounded and serves for detecting the water temperature inside the wash tub;
- switch 38, whose other terminal is grounded and which serves
for activating a diagnostic phase on the appliance as described
later on;
- switch 39, whose other terminal is grounded and which is positioned so as to detect the presence of water in the wash tub.
Block 27 is then connected, over 5-wire line 40, to block 411
which controls the speed adjustment of motor 42 controlling
rotation of the basket (not shown) on the appliance. Motor 42

is connected to regulating block 41 over 8-wire line 43.
Control logic block 27 is then connected, over 15-wire line
44, to power control unit 25. This controls a water heating
resistor (45) via 2-wire line 46, a drain pump (47) via
2-wire line 48 and four electrovalves (49, 50, 51, 52) via
lines 53, 54, 55 and 56 respectively and common return line
57. It also has a 3-wire line (59) connecting it to door 60
for providing, as described later, a mechanical safety lock
and lock indication. Unit 25 also supplies motor speed regu-
lating block 41 over 3-wire line 61.

Fig. 2 is a detailed diagram of control logic block 27, com-
prising a microprocessor (65), for example an MK 3870. The
latter consists of a first input-output group (66) connected to block 67 for controlling, in the normal way, column
selection on indicator block 32. It is also connected to the
outputs of two gate blocks (68 and 69) which receive enabling
signals 70 and 71 respectively from decoder block 72 which
is assembled between output group 73 from microprocessor 65
and line 28 connecting button panel block 29. Output group
73 is then connected to decoder block 75 for controlling the
lines of indicators on block 32 via line 31. The outputs of
gates 68 and 69 are connected to input group 66. The gate 69
input is connected to line 28 via the switches on button pa-
nel block 29. The gate 68 input, on the other hand, is connected to :

- self-diagnosis signal line 76, described later on;
- line 77, connecting it to the three pressure switches (34,
35, 36), and line 78, connecting it to the output of threshold comparator 79 whose inverting input is connected to resistive divider 80, connected between a +5V terminal and ground, while its non-inverting terminal is connected to the output of switch 39.

Switch 38 is connected to line 28 connected to decoder 72. Resistor 37 is connected to the inverting input of threshold comparator 82 whose non-inverting input is connected to the output of analogue selector 83 controlled by output group 84 on microprocessor 65. The input of analogue selector 83 receives various different reference signals (85), for example, via block 86 comprising various resistive dividers. The output of comparator 82 is connected to input 87 on microprocessor 65.

Input 90, which cuts off microprocessor 65 externally, is connected to the output of threshold comparator 91 whose inverting input is connected to resistive divider 92, connected between a +5V supply and ground, while its non-inverting input is connected to resistive divider 93, connected between a +14.5V terminal and ground.

An input-output group (95) on microprocessor 65 is connected to inputs and outputs on a (RAM) memory cell block (96) which receives address signals from group 84. Block 96 has a disabling input (97) connected, together with disabling input 98 of gate block 99 (described later) and zeroing (RESET) input 100 on microprocessor 65, to the output of circuit 101. The latter is supplied with +14.5V and supplies and output signal when this input voltage falls below a preset threshold, i.e. 7.5V, a few volts lower than the threshold set for comparator 91, i.e. 12V.

Memory block 96 has a supply pin (103) parallel to which is ground connected a condenser (104) of suitable capacity, e.g. 250 microfarad, to provide an auxiliary voltage supply source. Pin 103 is connected to the cathode of diode 105 whose anode is connected to a +8V supply terminal via resistor 106. The anode of diode 105 is connected to the anode of diode 108 whose cathode is connected to a +5V supply terminal. Two-wire line 26 is then grounded by one wire and connected by the other to pin 103 via resistor 110.

Microprocessor 65 has a group of four outputs (111) connected via line 44 to unit 25 for controlling (as described later) the four electrovalves 49, 50, 51 and 52. Microprocessor 65 also has three outputs (112, 113, 113, 114) connected again over line 44 to unit 25 for controlling respectively (as described later on) door 60, drain pump 47 and heating resistor 45. Microprocessor 65 also has an output (115) connected via gate block 99 and line 44 to unit 25 for consenting (as described later) power supply to the actuators. Line 44 also connects +14.5V, +8V and +5V supply from unit 25 to block 27. Line 40 connecting block 41 is also connected to output group 120 on microprocessor 65.

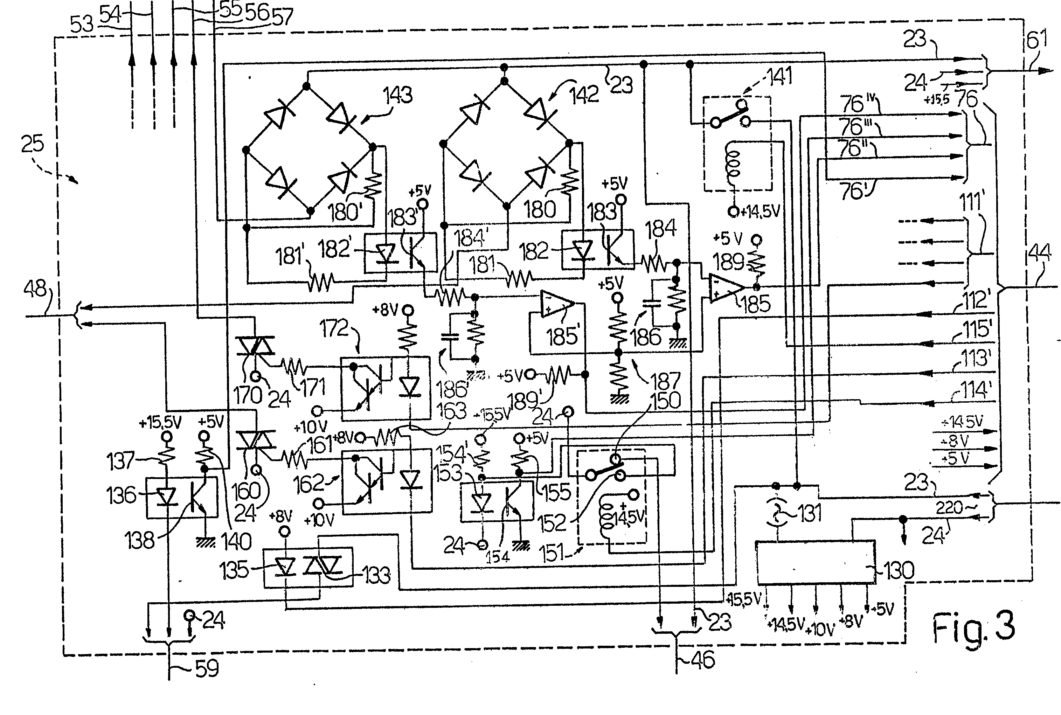

Fig. 3 shows a detailed diagram of power control unit 25. Supply wire 24 is connected to various circuit connecting points, indicated by the same number, as well as to one end of the primary winding of supply transformer 130, whose other end is connected, via fuse 131, to the other a.c. mains supply wire (23). Transformer 130, with the assistance of rectifying and voltage reducing blocks, supplies voltages of
15.5, 14.5, 8 and +5V. Wire 23 is connected to supply TRIAC
133 which is connected to wire 24 via line 59 connecting
door 60 and via a device for safety locking door 60 after a
preset length of time. The device may consist, for example,
of a heating resistor which acts on a two-metal blade activating a safety lock on door 60. TRIAC 133 is controlled by
a photodiode (135) whose anode is connected to +8V and its
cathode, via wire 112', to output 112 on microprocessor 65.
Activation of the safety lock on door 60 also closes a microswitch, connected between wire 24 and the cathode of photo-
diode 136 whose anode is connected to a +15.5V terminal via
resistor 137, so as to activate an NPN phototransistor (138).
The emitter on the latter is grounded while its collector is
connected, via connection 76' on line 76, to the input of
gate 68 and, via resistor 140, to a +5V supply.
Via a contact on relay 141 for cutting off supply to the actuators, a.c. supply wire 23 is connected to : one terminal
on heating resistor 45; an a.c. supply terminal on diode
bridge 142 whose other a.c. supply terminal is connected to
a terminal on drain pump 47; an a.c. supply terminal on diode
bridge 143 whose other a.c. supply terminal is connected to
wire 57 common to electrovalves 49, 50, 51 and 52; and line
61 for supplying block 41. The coil on relay 141 is connected between a +14.5V supply terminal and wire 115' connected
to the output of gate block 99.

The other end of heating resistor 45 is connected to a first terminal (150) of relay 151 whose common terminal is connected to wire 24. The other switch terminal (152) is connected to the anode of photodiode 153, which is also connected to a +15.5V supply terminal via resistor 154', and whose cathode is connected to wire 24. Photodiode 153 acts on NPN phototransistor 154 whose emitter is grounded and whose collector is connected directly to wire 76'" on line 76 and, via resistor 155, to a +5V terminal. The coil on relay 151 is connected between a +14.5V terminal and wire 114' which is connected to output 114 on microprocessor 65.

The terminal on drain pump 47 not connected to diode bridge 142 is connected to wire 24, via TRIAC 160 which is controlled, via resistor 161, by the output of +10V optoinsulating unit 162. The diode controlling unit 162 has its anode connected, via resistor 163, to a +8V terminal and its cathode connected, via line 113', to output 113 on microprocessor 65. Similarly, each wire 53, 54, 55 and 56 of electrovalves 49, 50, 51 and 52 is connected to connection 24 via TRIAC 170 (only one shown) whose control electrode is connected, via resistor 171, to optoinsulating control unit 172, similar to 162, and whose control diode cathode is connected to one of wires 111 on line 111' connected to microprocessor 65.

The two d.c. terminals on diode bridge 142 are connected via resistor 180 parallel to which is connected the series

connection of resistor 181 and photodiode 182 which controls
NPN phototransistor 183 whose collector is connected to a
+5V terminal whose emitter is connected, via resistor 184,
to the inverting input of threshold comparator 185. The latter input is also grounded via a parallel unit (186) comprising a resistor and condenser. The non-inverting input of
comparator 185 is connected to resistive divider 187 connec-
ted between a +5V supply terminal and ground. The output of
comparator 185 is connected to wire 76" on line 76 and to a
+5V supply terminal via resistor 189.

The same part connections also apply to diode bridge 143 for
which the same numbers are therefore used. The output of com-
parator 185' is connected to wire 76"" on line 76.

Fig. 4 shows button panel and indicator blocks 29 and 32 to
the side of on/off switch 20 which form a panel for control-
ling and selecting the operating cycles as described later
on. The panel consists of a first group (200) of six buttons
(29) with six associated indicators (32) for setting the type
of fabric being washed. A second group (201) of three buttons
(29) and indicators (32) is for setting the type of dirt. A
third group (202) of two buttons (29) and indicators (32) is
for setting the size of the load. The bottom part of the pa-
nel contains an indicator (203) showing door 60 has not been
closed, a group of miscellaneous operation indicators (204,
205, 206), a group of seven water temperature indicators
(207) and a group of four basket motor speeds (208). Two
buttons (210, 211) are also provided for lowering the set-

tings indicated by groups 207 and 208. Other controls include an end-of-cycle indicator (212), a cycle start button (213) and indicator (214), a cycle stop button (215), a high-speed operating button (216) and a malfunctioning indicator (218).

Operation of the washing machine shown in Figs 1 to 4 is programmed according to normal cycles by microprocessor 65 which suitably combines operation of electrovalves 49, 50, 51 and 52, heating resistor 45, basket motor 42 and drain pump 47. Basic operation of microprocessor 65, which controls speed regulator 41 and indicator group 32 on the basis of data received from button panel 29, level sensors 34, 35 and 36, temperature resistor 37 and water detector 39, is essentially standard and will therefore not be described in detail. What will be described is general operation of the washing machine with special emphasis on the characteristics involving the present invention.

When on/off switch 20 closes, switch 21 also closes and 22 opens for charging condenser 104 and supplying memory block 96. Condenser 104 is charged for supplying block 96 under special conditions described later on. Supply voltage is sent to connections 23 and 24 and, from there, to transformer 130 on power control unit 25 for supplying control logic block 27 and all the circuits supplied with reduced voltage from transformer 130. This enables the programme on microprocessor 65 which, after a brief diagnosis in which it turns on all the indicators (32) to check they are working, prepares to accept three settings from the operator : the type of fabric, type of dirt and size of the load. For the first setting, all six indicators on group 200 start flashing and one of them is selected by pressing the relative button. Once this has been done, all the indicators on group 200 go off except the one which has been selected which stays on without flashing. At this point, the second group of indicators (201) starts flashing and is selected in the same way as the first, followed by selection of one or other of indicators 202. Once this last setting has been made, all the indicators on the bottom of the panel (204, 205, 206) come on to show the wash cycles set by microprocessor 65 according to the operator's settings, accompanied by indicators 207 and 208 showing the hot water temperature and spinning speed provided for in the elected programme. At the same time, start light 214 begins flashing to invite the operator to start the washing operation. When cycle start button 213 is pressed, output 112 on microprocessor 65 sends out a signal which activates TRIAC 133 via photodiode 135. In the space of a few seconds, the safety lock on door 60 is activated, the lock detector switch closes causing diode 136 to activate photo transistor 138, and a signal is sent to connection 76' and, via gate 68, to microprocessor 65 which thus detects door 60 has been locked. Microprocessor 65 then sends out a signal from output 115, controls the coil on relay 141 and supplies voltage to the actuators, i.e. heating resistor 45, drain

pump 47, electrovalves 49, 50, 51 and 52 and speed regulating block 41 of motor 42 which are activated according to the various cycle combination settings as described later. The three indicators showing the settings on groups 200, 201 and 202, the cycle start indicators (214) and the door 60 lock indicator (203) activated by the signal on connection 76', all stay on throughout the wash programme controlled by microprocessor 65. The wash stage indicators go off as each stage is performed only the ones relative to unperformed stages remaining on. Temperature and spinning speed indicators 207 and 208 go off at the end of their respective stages. At the end of the full programme, the signal from output 112 on microprocessor 65 is cut off which opens TRIAC 133 and de-activates the lock device on door 60. After a given length of time, i.e. a few tens of seconds, the lock device on the door opens, followed by the microswitch connected to diode 136, which cuts off the signal to connection 76' to indicate the door has been released. Indicators 203 and 214 go off and end-of-cycle indicator 212 comes on. At the end of the washing operation, therefore, only indicator 212 and those on groups 200, 201 and 202 showing the initial settings are left on. At this point, the operator can choose between :

- turning the machine off by means of switch 20 : this opens switch 21 to cut off supply to wires 23 and 24 and closes switch 22 which discharges condenser 104 and cuts off supply to memory block 96;

- repeating the wash cycle by pressing button 216;
- pressing button 215 to cancel all the previous data and
setting a new wash cycle as described for button groups 200,
201 and 202.

Before pressing cycle start button 213, it is possible to
alter the temperature setting (downwards) and the spin setting (up or down). These are set automatically by the pro-
gramme on microprocessor 65 and indicated by lights 207 and
208. Both changes are made by pressing buttons 210 and 211
respectively until the required setting is obtained.

Button 216, on the other hand, can be pressed repeatedly for
skipping a number of wash cycles. After cycle start button
213 has been pressed, the appliance receives no instruction
other than that of stop button 215. The stop condition pro-
duced by pressing button 215 is displayed by cycle start but-
ton 214 flashing. In the stop condition, diode 135 controlling
TRIAC 133 on the door 60 lock device is de-activated but only
if the water in the machine is below a given level indicated
by switch 39. Indicator 203 stays on until door 60 is actually
released a few tens of seconds later.

Provision is also made on the appliance for indicating various types of operating faults. As already mentioned, no water
in the tub is indicated by switch 39. When off, indicator 203
shows door 60 may be opened and, when on (flashing), that the
door must be closed. Pressing cycle start button 213, even
with door 60 open, activates TRIAC 133 which, in turn, acti-

vates the safety lock on door 60 after a few seconds. When
the microswitch connected to diode 136 closes, a general con
sent signal for performing all the operating stages is produced on connection 76' and indicator light 203 comes on per-
manently. If the microswitch is still open, however, light
203, which was previously off, starts flashing after, say,
15 seconds and all that is needed is to close door 60 to
start the machine.

Design of the present invention also provides for various
diagnostic operations on the appliance : an automatic diagnosis, each time on/off switch 20 is turned on, makes a quick
check of microprocessor 65 and all the indicators (32) and
actuators (49, 50, 51, 52, 47, 45, 60). It also performs a
continuous automatic diagnosis throughout the wash cycle and
any faults are indicated by light 218 coming on. The type of
fault is also detected and memorised for fast diagnosis by
a repair technician. Microprocessor 65 detects any overfilling, overdraining or overheating and causes the correspond-
ing indicators (32) to start flashing. In the event of a
fault on any of the  actuators, a special combination of in-
dicators 32 lights up to show the type of fault involved as
described in detail later on.

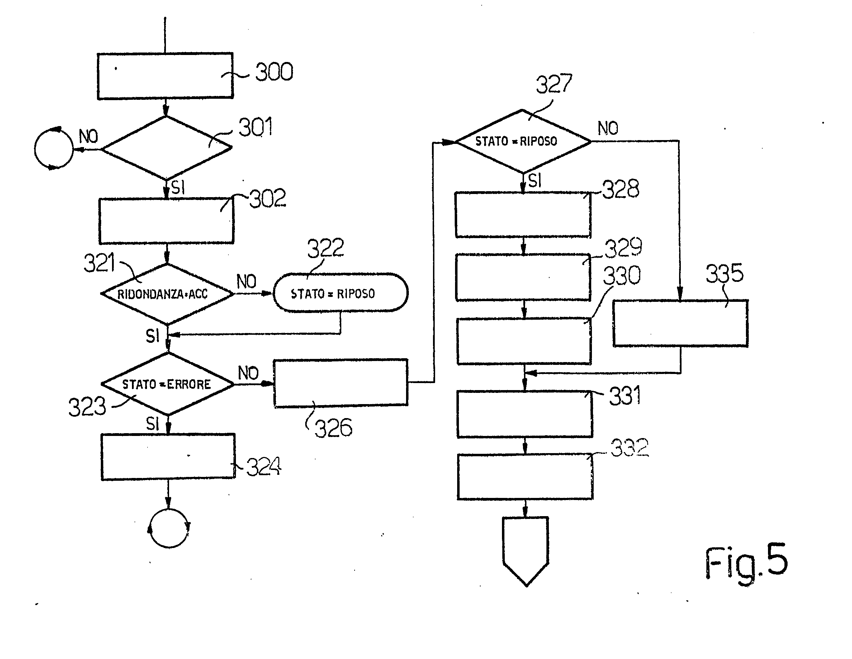

With reference to Fig. 5, a detailed description will now be
given of the machine operating cycle with reference to different operating blocks. Block 300 diagnoses the condition of
the fixed (ROM) memory block on microprocessor 65 by making
a calculation of the 2048 bytes, considered as binary numbers, in the ROM memory. This should give a known result which is checked by block 301. If the result is wrong, microprocessor 65 is sent to a closed error cycle with no signal being given as it would be dangerous to use microprocessor 65 while it is out of order. If the result is correct, block 302 reads the condition of memory block 96 to ascertain whether supply has been caused by activating on/off switch 20 or restored after a mains power cut. In the first case, switch 22 was closed and discharging condenser 104 so that the content of memory block 96 will be haphazard. In the second (temporary power failure), since switch 22 is open, the content of memory block 96 is valid in that it has been kept supplied with voltage from condenser 104. Microprocessor 65, in fact, loads memory block 96 with codes relative to data to be preserved in the event of a power cut, e.g. wash phases already performed (and which must not be repeated after power supply is restored) and any faults on the machine. Memory block 96 is loaded whenever the data is available, though this may only be done when it is certain supply voltage will not fall below a preset threshold before the loading operation has been finished. Via the signal supplied to input 90 on microprocessor 65, comparator 91 therefore enables loading if supply voltage is over a given threshold, e.g. 12V, and disables it if voltage is below that threshold. In the event of a power cut, voltage does not fall instantly but takes a certain amount of time : if the voltage detected by comparator 91 is equal to or over 12V, there is no doubt the loading operation can be completed before voltage falls so low as to endanger efficient circuit operation.

Therefore, if the fall in voltage is not caused by a transient variation but by a power cut on the mains, in addition to comparator 90 not enabling loading of memory block 96, the latter is controlled by circuit 101 to prevent any wrong data from being accepted, microprocessor 65 is zeroed and gate 99 cut off by controlling the coil on relay 141 which opens up supply to the various actuators.

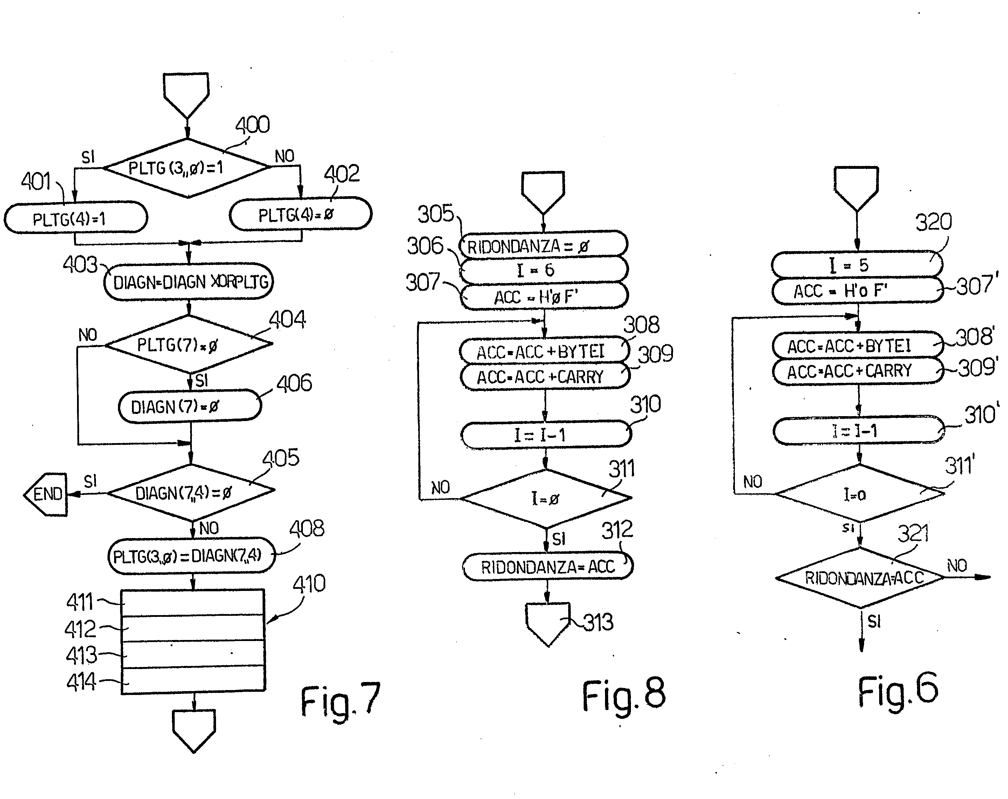

Memory block 96 contains six bytes, five for cycle data and one redundant, calculated as shown in Fig. 8. The bytes are numbered 6, 5 .... 1 and briefly byte I = 6, 5.....1. Redundancy $\tau$ is byte 6. This brings us to block 305 in which redundancy = 0, block 306 in which I = 6 and block 307 in which an ACC (accumulator) register = H' 0 F', i.e. 15 in hexadecimal notation. If all six bytes read zero, which would happen if block 96 broke down, the function of block 307 is to prevent the content from being accepted as valid and which the check calculation would lead to believe. From block 307 we come to block 308, which loads into the ACC register the value determined by block 307 plus the value of the first byte, and to block 309 which performs the carry-over function. This brings us to block 310 in which I = I - 1 and to block 311 which calculates whether I = 0. If it does not, we go back to block 308 to calculate it again and, when I = 0, on to block 312, in which the redundancy register = ACC, and block 313 which enters the calculated redundancy value into byte 6 of block 96.

0068266

Block 302 in Fig. 5 then picks up the six bytes from memory
block 96 and makes a calculation of the first five which
should work out equal to byte 6 read by block 96, if supply
to the latter has not been cut off. The reading cycle is
shown in Fig. 6 : block 320, in which I = 5, goes on to block
307', which operates like block 307, and from there to blocks
308', 309', 310' and 311' which operate with blocks 308, 309,
310 and 311 in Fig. 8. When I = 0, block 311' goes on to block
321 which calculates whether redundancy (i.e. byte 6) = ACC
as calculated. If it does not, this means the content of memory block 96 has been altered, i.e. switch 20 has been open
ed for starting the cycle, which brings us to block 322 which
loads the idle condition into one of the bytes containing the
status of microprocessor 65. This brings us to block 323 which
checks whether the machine is in an error condition determined
by the operating block in Fig. 7, as described later. If the
check made by block 321 is affirmative, however, this means
the content of memory block 96 has not been altered, i.e.
voltage supply has been restored after a mains power cut,
and we move directly on to block 323. This checks whether the
machine status byte indicates an error condition. If it does,
this means the machine was already in the error condition before supply was cut off and we move on to block 324 which ac-
tivates error cause indicators 32, as described later on, and
sends microprocessor 65 into a closed error cycle. If, on the
other hand, the block 323 check is negative, i.e. the machine is not in an error condition, we move on to block 326 which enables a continuous diagnostic cycle of the actuators, as described later on with reference to Fig. 7. From block 326 we come to block 327 which checks whether the machine is in the idle condition. If it is, which means the start of a normal cycle by activating switch 20, we come to block 328 which diagnoses the efficiency of indicators 32. Six bytes of the RAM memory block inside microprocessor 65 are, in fact, for indicators 32. The interrupt subprogramme generated by the timer inside microprocessor 65 every 2 milliseconds refreshes LEDs 32 which are piloted in cycles byte by byte, each byte lasting 2 milliseconds. For diagnosing LEDs 32, block 328 makes each bit of the six bytes equal to logic level 1 and counts off the time LEDs 32 are to be kept on by means of a count cycle. For this length of time, the interrupt subprogramme turns all the LEDs on. If any are faulty and fail to tome on, this is detected by the operator - an important point which also involves other indications. At the end of the set time, block 328 zeroes the six bytes of the RAM memory block. on microprocessor 65 used for LEDs 32.

This brings us to block 329 which determines on microprocessor 65 the wash programme selection made by the operator using button groups 200, 201 and 202, as already described.

This brings us to block 330 which provides for establishing the starting point of the programme, by means of button 213, or jumping phases by means of button 216 as already described.

This brings us to block 331, which determines the start of the wash programme by means of the consent signals already mentioned, e.g. door 60 close consent signal, and block 332
which, depending on the instructions contained in the micro-
processor 65 memories, determines performance of the various
wash cycles.

If, on the other hand, the check made by block 327 proves ne-
gative, this means operation has been resumed after a temporary power cut prior to which the machine was performing a
correct wash programme. This therefore brings us to block 335,
which calls up the data contained in the memory block 96 bytes
relative to the wash programme status prior to the power cut,
and to block 331 which takes the wash programme up from the
condition detected by block 96.

The continuous diagnosis of actuator status, performed by
enabling block 326, is performed during the microprocessor
65 interrupt controlled by the timer inside. Continuous automatic diagnosis was set at a rate of 48 milliseconds, its ef-
ficiency depending on reliable signal return circuits which
reproduce the YES or NO conduction status of the actuators.
The time of 48 milliseconds is such that the transistors on
the actuators switching to conductive or idle status can safe
ly be run down.

As described in detail later on, in the auto-diagnosis condition, microprocessor 65 compares the group of signals from
outputs 111, 112, 113 and 114 (controlling electrovalves 49,
50, 51 and 52 respectively, the door 60 safety lock, drain

pump 47 and heating resistor 45) with signals 76"", 76', 76" and 76"' detecting actual operation of the actuators. For heating resistor 45, the operation detector circuit utilizes switch contact 152 on relay 151. The return signal on wire 76"' is at logic level 0 or 1 respectively if resistor 45 is supplied or not. Reliability of the data on connection 76"' depends on reliable operation of relay 151 controlling direct supply to resistor 45.

The status of door 60 is diagnosed using the contact connected to diode 136 which is closed by the electromechanical lock device supplied via TRIAC 133.

For electrovalves 49, 50, 51 and 52 and drain pump 46, which are low power actuators, the diagnostic signals on connections 76"" and 76" respectively detect the flow of current to the actuators directly.

Fig. 3 shows two similar circuits. The one with diode bridge 142 is for detecting operation of pump 47 and the one with diode bridge 143 for detecting operation of any one of electrovalves 49, 50, 51 and 52 which only operate one at a time. Resistors 180 and 181 provide for reconciling the maximum current allowed on diode 182 with the maximum a.c. current on the actuator. As the current in diode bridge 142 (or 143) is a pulsating current, an integrator is provided downstream from phototransistor 183, consisting of resistor 184 and group 186. When drain pump 47 and the electrovalves are activated, the logic signal at the output of comparator 185 or 185' switches to 0. Resistor 184, together with group 186, ensures that the

voltage at the inverting input of threshold comparator 185 falls below the preset threshold within a maximum time of less than 48 milliseconds after the actuator ceases to be supplied, after which the signal on connection 76" or 76"" switches to logic level 1.

The actuators are piloted by microprocessor 65 via outputs 111, 112, 115, 113 and 114. Relay 141 is closed after the door 60 lock detector signal on connection 76' is received and opened, before the door is opened, by removing the signal on connection 112' for diode 135. At a rate of 48 milliseconds, the diagnostic signals on line 76, which are now operating steadily as regards the actuator controls received 48 milliseconds before, are compared with the actuator controls still present at one of the output gates on microprocessor 65. For controlling resistor 45, electrovalves 49, 50, 51 and 52 and drain pump 47, the pilot signals at the output of microprocessor 65 and the actuation status detected by line 76 must be the same, that is, if a close control has been sent out, the diagnostic status on line 76 must indicate a current flow or no current if an opening control has been sent out. For controlling door 60, a comparison is made of the close control received by relay 141 from output 115 on microprocessor 65 and the diagnostic signal on connection 76' indicating the status of door 60. The reason for this is that door 60 is locked and released only very slowly by TRIAC 133. Furthermore, only the condition is examined : if relay 141 is closed, door 60 must be locked.

The faults which can be detected on the appliance are of two types :

1) One of the actuators, instead of being inactive, is active : the control element (TRIAC or relay) is short-circuited;

2) One of the actuators, instead of being active, is inactive : the control element is cut off.

Only control 2) applies to door 60.

The structure of the PLTG byte in the RAM on microprocessor 65, which is sent out from a gate on microprocessor 65 itself, consists of 8 bits of which the first 4 are for controlling the four electrovalves (49, 50, 51, 52), the fifth for controlling door 60, the sixth for controlling drain pump 47, the seventh for controlling heating resistor 45 and the eighth for controlling sectioning relay 14 .

The diagnostic signals entering microprocessor 65 are described in the DIAGN byte in the RAM memory on microprocessor 65 itself. Structurally, it consists of 8 bits of which the fifth, sixth, seventh and eighth are for the signals on connections 76"" (electrovalves), 76" (pump), 76"' (heating resistor) and 76' (door). The diagnostic signals obtained from the arrangement in Fig. 3 indicate the opposite status of the actuators for which they must all be inverted for the bits of the PLTG byte to equal those of the DIAGN byte. Consequently, the bits of the DIAGN byte are at 0 if the actuator is not supplied and at 1 if it is.

Fig. 7 shows the diagnostic programme performed every 48 milli-

seconds. Block 400 checks whether at least one of the first
4 bits in the PLTG byte is equal to 1, that is, whether at
least one of the electrovalves is activated. If it is, we
move on to block 401 which makes the fourth bit in the PLTG
byte equal to 1. If it is not, we move on to block 402 which
makes the fourth bit in the PLTG byte equal to 0. At this
point, the individual pilot bits of the PLTG byte are aligned
with the relative bits of diagnostic signal DIAGN byte. Both
block 401 and 402 therefore bring us to block 403 which makes
a bit by bit comparison of the DIAGN and PLTG bytes. This is
done by means of an exclusive OR (X OR) function which is 1
if the two bits are different and 0 if they are the same.
The result of the operation remains in the DIGN byte. This
brings us to block 404 which checks to see whether the eighth
bit in the PLTG byte is equal to 0. If it is not, i.e. door
60 is closed, we move on to block 405. If it is, we move on
to block 406 which makes the eighth bit of the DIAGN byte
equal to 0, i.e. if sectioning relay 141 is open, the diag-
nosis is suspended on the status of door 60.

From block 406, we move on to block 405, just as we did directly from block 404, where a check is made to see whether
all of the last four bits in the DIAGN byte are equal to 0,
i.e. detected actuator status tallies with how they are being
piloted. If it does, this means there are no errors; if it
does not, this means there is at least one error, i.e. one of the actuators is not operating according to the instructions it has received. This brings us to block 408 which trans
fers the four bits (4 to 7) of the DIAGN byte into the first
four bits (0 to 3) of the PLTG byte. The seven bits (0 to 6)
of the PLTG byte therefore represent the error code : the
three from 4 to 6 show how the actuators have been piloted
while the four from 0 to 3 show the differences that have been
detected (see the Table below):

| PLTG | BIT | 7 | 6 | 5 | 4 | 3 | 2 | 1 | 0 |
|---|---|---|---|---|---|---|---|---|---|
| | | | Piloting | | | Differences | | | |
| Electrovalves 49,50,51,52: | | | | | | | | | |
| TRIAC 170 CTO CTO | | | | | 0 | | | | 1 |
| TRIAC 170 INTERR | | | | | 1 | | | | 1 |
| PUMP 47: | | | | | | | | | |
| TRIAC 160 CTO CTO | | | | 0 | | | | 1 | |
| TRIAC 160 INTERR | | | | 1 | | | | 1 | |
| RESISTANCE 45: | | | | | | | | | |
| PIL. RELAY 151 CTO CTO | | | 0 | | | | 1 | | |
| PIL. RELAY 151 INTERR. | | | 1 | | | | 1 | | |
| DOOR 60 RELEASED (SECT. RELAY 141 closed) | | | | | | 1 | | | |

With at least one of the actuators in an error condition such
as this, block 408 brings us to block 410 one section of which
(411) uses the bits of the PLTG byte to light indicators 32
in a given combination provided for in the above logic signal
table and give an accurate indication of the fault which is
deciphered via decoding means, e.g. over the control panel
on the appliance. A second section (412) memorises the error
status and the error code contained in the PLTG byte in memory block 96 supplied by condenser 104. A third section
(413) close-circuits the main programme on microprocessor 65
while a fourth (414) opens power supply relay 141. The machine therefore stops with the error status indicated in memory block 96 and the type of error displayed by indicators 32.
If the machine is turned off by activating switch 20, the
technician may activate switch 38 to put the actuators through
a quick no-load cycle and so find the error indication and error type display.

The advantages of the present invention will be clear from the
description given, in particular, the provision of automatic,
continuous self-diagnosis of actuator operation (electrovalves,
drain pump, heating resistor, door lock) with a high degree of
reliability afforded by the fact that actuator operation is
controlled by detecting operation of an electric signal on the
actuators themselves and not by detecting a control signal on
the microprocessor. On the electrovalves, it is the control signal sent directly to them that is detected via photodiode 182'; on drain pump 47, it is the operating signal that is detected by photodiode 182; on heating resistor 45, it is the position of activating relay 151 that is detected by photodiode 153 and, on door 60, it is actual locking of the door that is detected by photodiode 136. The type of fault on the actuator is shown by a convenient combination of indicators 32 the efficiency of which is checked by the appliance at the start of the operating cycle. The error status and code of one or more of the actuators are memorised in memory block 96 and preserved even in the event of a power cut. When power supply is restored, microprocessor 65 checks to see whether an error status was previously stored in block 96. Even in the event of a power cut under normal operating conditions, the operating status of the appliance, determined, for example, by the bits in the PLTG byte, is memorised in memory block 96 so that the operating cycle may be taken up again from where it was left off.

To those skilled in the art it will be clear that changes may be made to the appliance described by way of a non-limiting example, without, however, departing from the scope of the present invention.

For example, the household appliance in question, instead of being a washing machine, may be a dish-washing machine or any other appliance on which a number of actuators are activated according to given sequence combinations determined by a control microprocessor.

Dr. Ing. Roberto PRATO

## CLAIMS

1) - Household appliance comprising a number of actuators (49, 50, 51, 52, 47, 60, 45) controlled according to operating cycles, characterised by the fact that it comprises means (65) for automatic, repeat control of the operation of the said actuators by controlling electric signals (76) obtained by means (182', 182, 136, 153) for detecting the operation of an electric signal (111', 113', 112', 114') controlling the said actuators.

2) - Appliance according to Claim 1, characterised by the fact that the said automatic control means comprise a microprocessor (65).

3) - Appliance according to Claim 2, characterised by the fact that the said microprocessor (65) also controls the said operating cycles for the said number of actuators.

4) - Appliance according to any one of the previous Claims, characterised by the fact that the said control means comprise means (326, 403) for comparing, at preset intervals, the control signals of the said actuators with the said signals obtained from the said means for detecting operation of the said control signal.

5) - Appliance according to Claim 4, characterised by the fact that the said control means comprise means (405, 408, 411) for generating a no-operation signal relative to at least one of the said actuators, if the said comparison results negative.

6) - Appliance according to Claim 5, characterised by the fact that the said control means, depending on the logic level of the signal obtained from the said comparison, comprise means (403, 408) for discriminating between two no-operation causes and supplying the said indication.

7) - Appliance according to Claim 5 or 6, characterised by the fact that the said indication is supplied via the same means (32) used as an indication for the operator of the said operating cycles.

8) - Appliance according to Claim 7, characterised by the fact that the said means (32) comprise luminous diodes (leds).

9) - Appliance according to Claim 7 or 8, characterised by the fact that it comprises a mask which can be fitted on the said means (32) for obtaining the said indication depending on the combination of the said selected means (32).

10) - Appliance according to Claim 1, characterised by the fact that it comprises means (32) for indicating the said operating cycles to the user and means (328) for checking operation of the said indicating means (32) automatically when the appliance is turned on.

11) - Appliance according to Claim 10, characterised by the fact that the said means (32) comprise luminous diodes (leds).

12) - Appliance according to any one of Claims 4 to 10, characterised by the fact that, to comply with the case that the said comparison proves negative, the said control means comprise means (412) for memorising in an auxiliary memory (96) an error status signal and no-operation signal relative to at least one of the actuators.

13) - Appliance according to Claim 12, characterised by the fact that the said auxiliary memory (96) is supplied by means (104) which maintain supply voltage in the event of a temporary not desired power cut on the mains.

14) - Appliance according to Claim 13, characterised by the fact that the said means comprise a condenser (104) connected to the supply of the said auxiliary memory, parallel to the said condenser being connected a switch (22) activated simultaneously but in the opposite way to the on/off switch (21) on the appliance.

15) - Appliance according to any one of Claims 12 to 14, characterised by the fact that it comprises means (91, 101) for detecting a fall in supply voltage and for enabling memorisation of the operational status of the appliance in the said auxiliary memory.

16) - Appliance according to Claim 15, characterised by the fact that the said means comprise first means (91) for detecting the said fall at a first threshold and for enabling the said memorisation in the said auxiliary memory, and second means (101) for detecting the said fall at a second lower threshold and for disabling the said auxiliary memory (96), stopping the said control means (65) and opening a switch (141) so disabling the supply of power to the said actuators.

0068266

17) – Appliance according to any one of Claims 12 to 16, cha-racterised by the fact that it comprises means (312) for me-morising, in the said auxiliary memory (96), a status corresponding to a calculation combination of other statuses in the said memory, and means (320, 307', 308', 309', 310', 311', 321) for calculating the said status from the said other statuses, comparing it with the said memorised status and checking whether supply voltage to the said auxiliary memory has been cut off or not.

18) – Appliance according to any one of Claims 4 to 17, characterised by the fact that, to comply with the case that the said comparison proves negative, the said control means comprise means (414) for opening a switch (141) so disabling the supply of power to the said actuators.

19) – Appliance according to any one of Claims 2 to 17, cha-racterised by the fact that it comprises means (300) for making an initial check that the said microprocessor (65) is operating properly.

20) – Appliance according to any one of the previous Claims, characterised by the fact that the said control signal (111', 113') activates a power controlled semiconductor element (170, 160) for supplying the said actuator, the said electric control signal ($76^{IV}$, 76") being generated from the supply circuit of the said actuator via the said detecting means (182', 182).

21) – Appliance according to Claim 20, characterised by the fact that the said control signal, via an optoinsulating con-

0068266

nection (172, 162), activates the said power controlled semiconductor element (170, 160).

22) - Appliance according to Claim 21, characterised by the
fact that the said power controlled semiconductor element
(170, 160) is a TRIAC.

23) - Appliance according to any one of Claims 20 to 22, cha-
racterised by the fact that the said detecting means comprise
an optoinsulating connection (182' - 183'; 182 - 183) for sup-
plying the said electric control signal from the said supply
circuit of the said actuator.

24) - Appliance according to any one of Claims 20 to 23, characterised by the fact that the said supply circuit is supplied with a.c. voltage and comprises a bridge of rectifying
diodes (143, 142) on whose one-way current diagonal are assembled detecting means downstream from which are assembled
integrating means (186', 186) connected to an input on a
threshold comparator (185', 185) for supplying the said electric control signal.

25) - Appliance according to any one of Claims 20 to 24, cha-
racterised by the fact that it comprises individual detecting means (182', 183') for a number of actuators (49, 50, 51,
52) controlled by their respective control signals (111').

26) - Appliance according to any one of Claims 20 to 24, cha-
racterised by the fact that the said actuator is a motor for
a drain pump (47) on the said appliance.

27) - Appliance according to any one of Claims 20 to 25, cha-
racterised by the fact that the said actuators comprise electrovalves (49, 50, 51, 52).

0068266

28) - Appliance according to any one of Claims 1 to 19, characterised by the fact that the said control signal (112') activates a power controlled semiconductor element (133) for supplying electricity to the said actuator (60), the said actuator making a mechanical movement which is detected by the said detecting means (136) generating the said electric control signal (76').

29) - Appliance according to Claim 28, characterised by the fact that the said actuator (60) comprises a mechanical lock device activated by the said control signal and acting on a microswitch in a circuit of the said detecting means (136).

30) - Appliance according to Claim 29, characterised by the fact that the said mechanical device locks a door (60) on the said appliance.

31) - Appliance according to any one of Claims 28 to 30, characterised by the fact that, via the said control means (65), the said electric control signal (76') controls a relay (141) for supplying electric power to at least some of the actuators.

32) - Appliance according to any one of Claims 1 to 19, characterised by the fact that the said control signal (114') activates a relay (151) supplying an actuator (45), the complementary circuit of the said relay comprising the said detecting means (153, 154) for generating the said electric control signal (76"').

0068266

33) - Appliance according to Claim 32, characterised by the
fact that the said detecting means comprise an optoinsulat-
ing connection (153, 154) for supplying the said electric
control signal (76"') from the said complementary circuit
of the said relay (151).

34) - Appliance according to Claim 32 or 33, characterised
by the fact that the said actuator is a heating resistor (45).

35) - Household appliance, characterised by the fact that it
is a washing machine.

Dr. Ing. Roberto PRATO

- 1/6

Fig. 1

Fig. 2

Fig. 3

Fig.4

Fig.5

## Fig. 7

400 — PLTG (3,,∅) = 1

SI → 401 PLTG(4) = 1

NO → 402 PLTG(4) = ∅

403 — DIAGN = DIAGN XOR PLTG

404 — PLTG(7) ≠ ∅

NO ↓ SI → 406 DIAGN (7) = ∅

405 — DIAGN (7,4) = ∅

SI → END

NO → 408 PLTG(3,∅) = DIAGN(7,4)

410
411
412
413
414

**Fig. 7**

## Fig. 8

305 — RIDONDANZA = ∅
306 — I = 6
307 — ACC = H'∅ F'

308 — ACC = ACC + BYTE I
309 — ACC = ACC + CARRY

310 — I = I−1

311 — I = ∅

NO ↖

SI → 312 RIDONDANZA = ACC

313

**Fig. 8**

## Fig. 6

320 — I = 5
307' — ACC = H'o F'

308' — ACC = ACC + BYTE I
309' — ACC = ACC + CARRY

310' — I = I−1

311' — I = 0

NO ↖

SI ↓

321 — RIDONDANZA = ACC → NO

SI ↓

**Fig. 6**

0068266

# EUROPEAN SEARCH REPORT

EP 82 10 5192

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-A-4 245 310 (G.E. KIEFER) <br> * Abstract * | 1-3 | D 06 F 33/02 <br> A 47 L 15/46 <br> G 05 B 23/02 |
| A | US-A-4 245 309 (G.E. KIEFER) <br> * Abstract * | 1-3 | |
| A | FR-A-2 444 742 (CONSTRUCTIONS ELECTRO-MECANIQUES D'AMIENS) <br> * Claim 1 * & GB - A - 2 039 677 | 1-3 | |
| A | FR-A-2 399 826 (BOSCH-SIEMENS) <br> * Claim 1 * | 4 | |
| A | DE-A-2 941 789 (BOSCH-SIEMENS) <br> * Page 4, paragraph 2 * | 13,14 | |
| A | US-A-4 208 890 (R.F. WOOD) <br> * Figure 3; column 7, lines 53-57 * | 22 | **TECHNICAL FIELDS SEARCHED (Int. Cl. 3)** <br><br> A 47 L <br> D 06 F <br> G 05 B |

The present search report has been drawn up for all claims

| Place of search | Date of completion of the search | Examiner |
|---|---|---|
| THE HAGUE | 25-08-1982 | MIELKE W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82